# EUROPÄISCHE PATENTANMELDUNG

(11) **EP 3 683 117 A1**
(43) Veröffentlichungstag der Anmeldung: **22.07.2020**
(21) Anmeldenummer: 19211825.5
(22) Anmeldetag: 27.11.2019
(51) Int. Cl.: B61H 5/00, B61H 15/00, F16D 65/38, F16D 65/56

(54) **VERSCHLEISSNACHSTELLER EINER KOMPAKT-BREMSZANGENEINHEIT, UND KOMPAKT-BREMSZANGENEINHEIT MIT EINEM VERSCHLEISSNACHSTELLER**

(30) Priorität: 18.01.2019 DE 102019101342
(71) Anmelder: KNORR-BREMSE Systeme für Schienenfahrzeuge GmbH, 80809 München (DE)
(72) Erfinder: MATHIEU, Michael, 82178 Puchheim (DE); ELSTORPFF, Marc-Gregory, 80368 München (DE); HÄMMERL, Bernhard, 82216 Maisach (DE); KRAUS, Harry-Werner, 81825 München (DE); FUDERER, Erich, 82256 Fürstenfeldbruck (DE)

(57) **Zusammenfassung**

Ein Verschleißnachsteller (7) einer Kompakt-Bremszangeneinheit (1), insbesondere für Schienenfahrzeuge, umfasst ein Nachstellergehäuse (8), ein Nachstellerjoch (9), einen Gewindetrieb mit einer Spindel und einer auf der Spindel verschraubbaren Druckmutter. Der Verschleißnachsteller ist (7) als ein pneumatischer Verschleißnachsteller (7) mit einem Nachstellzylinder und einem Rückhubbegrenzer ausgebildet. Eine Kompakt-Bremszangeneinheit (1) ist mit dem Verschleißnachsteller (7) ausgerüstet.

## Beschreibung

Die Erfindung betrifft einen Verschleißnachsteller einer Kompakt-Bremszangeneinheit nach dem Oberbegriff des Anspruchs 1. Die Erfindung bezieht sich auch auf eine Kompakt-Bremszangeneinheit mit einem solchen Verschleißnachsteller.

In sogenannten Kompakt-Bremszangeneinheiten wird der Verschleiß der Bremsbeläge und der Bremsscheibe durch eine Verlängerung eines Verschleißnachstellers, der auch als Druckstangensteller bezeichnet wird, in der Bremszange automatisch ausgeglichen.

Bei angelegter Bremse muss der Verschleißnachsteller die Abstützkraft auf die Zangenhebel halten, welche als Reaktionskraft aus der Zuspannkraft auf die Bremsbeläge resultiert.

Der Ansteuermechanismus des Verschleißnachstellers und der Verschleißnachsteller selbst müssen so gestaltet sein, dass ein Lüftspiel, welches auch als Belagspiel benannt wird, unabhängig vom Verschleißzustand der Beläge und der Bremsscheibe eingestellt wird. Eine Querauslenkung der Zange aufgrund einer Achsquerverschiebung darf nicht zu einem ungewollten Nachstellen führen.

EP 0 699 846 B1 beschreibt ein Bremsgestänge für Fahrzeuge, insbesondere Schienenfahrzeuge, mit einem stangenartigen, automatischen Verschleißnachsteller, dessen Länge über einen Gewindetrieb verändert werden kann. Der Gewindetrieb beinhaltet ein Schraubgetriebe, das als Verschraubungsteile eine Gewindespindel und eine auf dieser verschraubbare Mutter aufweist. Da die Ansteuerung des Nachstellers nur einen begrenzten Betätigungsweg aufweist, wird das Gewinde mit einer großen Steigung ausgeführt. Das Gewinde ist deshalb nicht selbsthemmend. Die Gewindespindel ist über eine vorgespannte Stirnverzahnung (Ratschenkupplung) im Joch des Verschleißnachstellers gegen Verdrehen unter Axialkraft gesichert. Über einen Sechskant kann die Gewindespindel von außen manuell im lastfreien Zustand gedreht werden. Eine solche manuelle Verdrehung erfolgt in verkürzender Richtung zum Bremsbelagwechsel, in verlängernder Richtung zum anschließenden groben Einstellen des Belagspieles, d.h. des Lüftspiels.

Die Mutter ist drehbar auf einem mit dem Nachstellergehäuse verschraubten Rohr gelagert. Sie kann in verlängernder Richtung über eine Stellhülse mit Freilauf gedreht werden. Die Stellhülse besitzt eine Außenverzahnung, über die sie mittels eines geeigneten Antriebsteiles angetrieben werden kann. Eine Drehung der Mutter in verkürzender Richtung wird durch einen Schlingfedernfreilauf zwischen Mutter und Gehäuserohr verhindert.

EP 2 531 741 B1 bezieht sich auf einen Verschleißnachsteller mit gleichem Wirkprinzip wie oben angegeben, aber in einer anderen Anordnung. Der Verschleißnachsteller für eine Bremszange einer Scheibenbremse eines Schienenfahrzeugs umfasst ein Schraubgetriebe, welches als Verschraubungsteile eine Gewindespindel und eine auf dieser verschraubbare Mutter aufweist, wobei eines der Verschraubungsteile sowie ein Stellelement zum drehenden Antrieb dieses Verschraubungsteils in Verschleißnachstellrichtung in einem ersten Verschleißnachsteller-Gehäuse drehbar und das andere Verschraubungsteil in einem zweiten Verschleißnachsteller-Gehäuse drehfest gelagert ist, ein in Drehrichtung des drehbaren Verschraubungsteils entgegen einer Verschleißnachstellrichtung sperrenden und in umgekehrter Drehrichtung freilaufenden Schlingfederfreilauf, durch welchen das drehbare Verschraubungsteil mit einem drehfesten Teil koppelbar ist, wobei das drehfeste Teil unmittelbar durch das erste Verschleißnachsteller-Gehäuse gebildet wird. Eine Schlingfeder des Schlingfederfreilaufs wirkt einerseits mit einer radial äußeren, eine äußere Oberfläche des ersten Verschleißnachsteller-Gehäuses ausbildenden Wirkfläche und andererseits mit einer radial äußeren Wirkfläche des drehbaren Verschraubungsteils oder eines mit diesem mitdrehenden Elements reibschlüssig zusammen, wobei die Wirkfläche des ersten Verschleißnachsteller-Gehäuses an einem rohrförmigen, mit dem ersten Verschleißnachsteller-Gehäuse einstückigen Fortsatz ausgebildet ist.

EP 0 732 247 B1 beschreibt eine insbesondere für Schienenfahrzeuge mit querverschieblichen Radsätzen vorgesehene Scheibenbremse mit einer Bremszange, deren Zangenhebel einerseits an Bremsbacken, anderseits an einer sie verbindenden Stange mit integriertem Verschleißnachsteller und mittig an einem Bremskraftmotor bzw. einem diesen halternden Bremsengehäuse angekoppelt sind. Der Verschleißnachsteller weist einen Betätigungshebel auf, der mittels einer Steuerstange zur Verschleißnachstellerbetätigung drehbar ist. Die endseitigen Koppelstellen der Steuerstange, die in Abhängigkeit vom Hub des Bremskraftmotors verschieblich ist, liegen mit ihren Koppelachsen zumindest annähernd auf den bremsbackenfernen Drehachsen der Koppelstellen eines Zangenhebels. Durch diese Lage der Koppelstellen wird ein Betätigen des Verschleißnachstellers beim seitlichen Versetzen der Bremsscheibe des Radsatzes unabhängig vom Löse- bzw. Betätigungszustand der Scheibenbremse ausgeschlossen.

Das Funktionsprinzip der bekannten Verschleißnachsteller bewirkt einen vergleichsweise kleinen Nachstellhub während eines Bremsvorganges. Dieser reicht aus, um den während einer Bremsung auftretenden Verschleiß sicher nachzustellen. Als nachteilig wird angesehen, dass ein wesentlich zu großes Belagspiel, z.B. nach einem Belagwechsel, aber von Hand voreingestellt werden muss, damit die Bremse von Anfang an betriebsbereit ist.

Die Aufgabe der Erfindung besteht darin, einen verbesserten Verschleißnachsteller zu schaffen, mit welchem auch eine schnelle Nachstellung eines wesentlich zu großen Belagspieles - wie es z.B. nach den Belagwechsel vorhanden sein kann -mit ausreichender Stellgenauigkeit ermöglicht wird und welcher in Anschaffung und Wartung kostengünstig ist.

Eine weitere Aufgabe ist es, eine verbesserte Kompakt-Bremszangeneinheit bereitzustellen.

Die Aufgabe wird durch den Gegenstand des Anspruchs 1 gelöst.

Die weitere Aufgabe wird durch den Gegenstand des Anspruchs 14 gelöst.

Ein Erfindungsgedanke besteht darin, den Verschleißnachsteller anstelle über den Kolbenhub des Bremszylinders und einem mechanischen Getriebe zu betätigen, den Verschleißnachsteller direkt über den Bremsdruck anzutreiben.

Ein erfindungsgemäßer Verschleißnachsteller einer Kompakt-Bremszangeneinheit, insbesondere für Schienenfahrzeuge, umfasst ein Nachstellergehäuse, ein Nachstellerjoch, einen Gewindetrieb mit einer Spindel und einer auf der Spindel verschraubbaren Druckmutter. Der Verschleißnachsteller ist als ein pneumatischer Verschleißnachsteller mit einem Nachstellzylinder und einem Rückhubbegrenzer ausgebildet.

Der Bremsdruck wirkt nicht nur auf den Kolben im Bremszylinder, sondern auch auf einen kleinen Nachstellkolben im Verschleißnachsteller, der damit die zum Nachstellen erforderliche Kraft auf die Bremszange aufbringt. Eine zusätzliche Antriebseinrichtung ist somit für den Verschleißnachsteller nicht erforderlich. Dies ist besonders platzsparend.

Eine erfindungsgemäße Kompakt-Bremszangeneinheit einer pneumatischen Scheibenbremse, insbesondere für Schienenfahrzeuge, umfasst zwei Zangenhebel, einen Bremszylinder, Bremsbeläge und einen Verschleißnachsteller. Der Verschleißnachsteller ist als ein pneumatischer Verschleißnachsteller ausgebildet und mit dem Druckmedium des Bremszylinders über eine Nachstellerdruckleitung beaufschlagt, wobei die Nachstellerdruckleitung an einem Bremszylinderanschluss oder/und an eine Druckleitung des Bremszylinders angeschlossen ist.

Ein besonderer Vorteil besteht somit darin, dass für die Funktion des Verschleißnachstellers nur eine Druckleitung vom Bremszylinder zum Nachstellzylinder erforderlich ist. Diese kann platzsparend und vergleichsweise kostengünstig ausgeführt werden.

In einer Ausführung ist der Nachstellzylinder in dem Nachstellergehäuse angeordnet, wobei der Rückhubbegrenzer zwischen dem Nachstellergehäuse und dem Nachstellerjoch in einem Rückhubbegrenzergehäuse angeordnet ist. Dies ist ein vorteilhaft kompakter Aufbau.

Eine weitere Ausführung sieht vor, dass eine Zylinderlaufbuchse in den Nachstellzylinder eingesetzt ist, in welcher der Nachstellkolben in Längsrichtung in einer Nachstellerachse verschiebbar angeordnet ist und mit einem Kolbenende der Spindel in axialer Richtung fest aber drehbar verbunden ist. Dies ist vorteilhaft, da sich so eine Bearbeitung des Nachstellergehäuses in Bezug auf den Nachstellzylinder vereinfacht.

Es ist von Vorteil, wenn der Nachstellzylinder mit dem gleichen Druckmedium beaufschlagbar ist, mit dem ein Bremszylinder einer Bremszangeneinheit, welcher der Verschleißnachsteller zuzuordnen ist, beaufschlagt ist, da somit keine zweite Versorgungsleitung im Fahrzeug für den Verschleißnachsteller vorzusehen ist.

Eine weitere Ausführung sieht vor, dass der Rückhubbegrenzer ein Rückhubbegrenzergehäuse, eine Zwischenplatte, einen Zahnring, mindestens eine Feder, die Druckmutter und eine Druckfeder umfasst. Somit lässt sich ein vorteilhaft kompakter Aufbau realisieren.

In einer noch weiteren Ausführung weist das Rückhubbegrenzergehäuse eine Basis mit einer Ausnehmung auf, in welcher der Zahnring drehsicher und längs einer Nachstellerachse verschiebbar gelagert ist. Damit ist eine einfache Anordnung dieses Funktionsbauteils auf engem Raum möglich.

Wenn der Zahnring zwischen der Zwischenplatte, welche zwischen dem Nachstellergehäuse und dem Rückhubbegrenzergehäuse angeordnet ist, und einem ersten Stirnwandring der Basis des Rückhubbegrenzergehäuses um ein Einstellmaß (e) verschiebbar ist, lässt sich das Rückhubbegrenzergehäuse für einen Anschlag für den Zahnring als weitere Funktion einfach nutzen.

Eine vorteilhaft einfache Zahnkupplung zwischen dem Zahnring und der Druckmutter ist dadurch gebildet, dass der Zahnring mit einer Verzahnung versehen ist, welche mit einer zu ihr korrespondierenden Verzahnung der Druckmutter in Eingriff steht.

Weiterhin ist vorgesehen, dass der Zahnring mittels mindestens einer Feder, die sich an der Zwischenplatte abstützt, mit einer Kraft beaufschlagt ist, welche den Zahnring mit seiner Verzahnung in Eingriff mit der Verzahnung der Druckmutter drückt. Dies ermöglicht einen raumsparenden Aufbau. Es können natürlich auch mehrere Federn, z.B. am Umfang des Zahnrings verteilt, vorgesehen sein. Auch eine größere, zentrale Druckfeder ist möglich. Die mindestens eine Feder dient zur Verschiebung des Zahnrings und hält dabei den Eingriff der Verzahnungen von Zahnring und Druckmutter aufrecht, so dass sich die Druckmutter nicht verdrehen kann

In einer weiteren Ausführung ist die Druckmutter mit der axialen Kraft einer Druckfeder beaufschlagt, die sich in dem Rückhubbegrenzergehäuse abstützt, und deren axiale Kraft der Kraft der mindestens einen Feder entgegengesetzt ist. Gerät die Druckmutter im Falle eines aufgetretenen Verschleißes außer Eingriff mit dem Zahnring, wird sie durch die Druckfeder auf der Spindel zurückgedreht zum Nachfassen des Eingriffs. Dadurch verlängert die vom Nachstellkolben verschobene Spindel das Längenmaß des Verschleißnachstellers auf einfache Weise, wodurch eine Verschleißnachstellung ermöglicht wird.

Dazu ist es in weiterer Ausführung vorgesehen, dass die Spindel mit ihrem Kolbenende, welches mit dem Nachstellkolben verbunden ist, über den Nachstellkolben in dem Nachstellzylinder in dem Nachstellergehäuse gelagert ist und sich durch den Verschleißnachsteller längs seiner Nachstellerachse bis in das Nachstellerjoch erstreckt, in welchem die Spindel mit einem Rückstellende gelagert ist. Dieser Aufbau ist vorteilhaft kompakt.

Es ist zudem vorteilhaft, wenn die Spindel an ihrem Rückstellende eine Rückstellverzahnung aufweist, welche mit einer Lagerbuchse, die in dem Nachstellerjoch drehfest angeordnet ist, und einer Axialfeder einen Ratschenmechanismus bildet. Damit wird eine manuelle Verdrehung der Spindel bei Wartung auf einfache Weise ermöglicht.

In einer noch weiteren Ausführung weist der Verschleißnachsteller weiterhin eine Ventileinrichtung auf, welche ein Einlassventil für ein Druckmedium, vorzugsweise Druckluft, und ein Entlüftungsventil umfasst. Mittels der Ventileinrichtung ist eine vorteilhaft einfache Steuerung des Verschleißnachstellers ermöglicht. Die Ventileinrichtung hält beim Lösen der Bremse (=Absenken des Bremsdruckes) den Druck im Nachstellzylinder länger aufrecht als der Bremsdruck im Bremszylinder wirkt. Ist der Druck im Bremszylinder geringer als zur Überwindung der auf die Druckmutter wirkenden Druckfeder erforderlich, kann der Nachsteller einen aufgetretenen Verschleiß an den Belägen durch Verlängerung des Verschleißnachstellers nachstellen. Erst dann wird der Steller durch das Entlüftungsventil zur Atmosphäre entlüftet.

In einer Ausführung ist die Ventileinrichtung in einem Ventilabschnitt des Nachstellergehäuses angeordnet. Dieses ist eine vorteilhaft platzsparende Anordnung.

Alternativ kann die Ventileinrichtung als separate Baugruppe außerhalb des Nachstellergehäuses in der Nachstellerdruckleitung angeordnet sein. Das ist beispielsweise für eine einfache Wartung vorteilhaft.

In einer besonders bevorzugten Ausführung der Kompakt-Bremszangeneinheit ist der Verschleißnachsteller als der oben beschriebene Verschleißnachsteller ausgebildet.

Ein besonderer Vorteil des erfindungsgemäßen Verschleißnachstellers besteht darin, dass wenn die Bremse mit einem wesentlich zu großem Belagspiel betätigt, z.B. nach einem Belagwechsel wird, verlängert sich der Nachsteller bereits beim ersten Bremsvorgang, bis die Beläge an der Bremsscheibe anliegen. Wird die Bremse wieder gelöst, verlängert sich der Verschleißnachsteller um einen weiteren Betrag, der dem gesamten Belaghub reduziert um das Belagspiel entspricht. ("Sprungsteller").

Ein weiterer besonderer Vorteil ist dadurch gegeben, dass für die Funktion des Verschleißnachstellers nur eine Druckleitung vom Bremszylinder zum Stellzylinder erforderlich ist. Diese kann platzsparend und vergleichsweise kostengünstig ausgeführt werden. Installationsarbeiten sind dazu nur mit geringem Aufwand nötig.

Es wird somit ein Verschleißnachsteller bereitgestellt, welcher eine schnelle Nachstellung mit ausreichender Stellgenauigkeit ermöglicht und der in Anschaffung und Wartung kostengünstig ist.

Ein Ausführungsbeispiel der Erfindung wird nachfolgend anhand der beigefügten Zeichnungen beschrieben.

Es zeigen:
- Figur 1: eine schematische Draufsicht eines Ausführungsbeispiels einer erfindungsgemäßen Kompakt-Bremszangeneinheit mit einem erfindungsgemäßen Verschleißnachsteller;
- Figur 2: eine Teilschnittansicht des Ausführungsbeispiels nach Figur 1;
- Figur 3: eine Seitenansicht des Ausführungsbeispiels nach Figur 1;
- Figur 4: eine Ansicht des Ausführungsbeispiels nach Figur 3 in Richtung einer Ansicht A;
- Figur 5: eine schematische Perspektivansicht des erfindungsgemäßen Verschleißnachstellers;
- Figur 6: eine schematische Längsschnittansicht des erfindungsgemäßen Verschleißnachstellers nach Figur 5; und
- Figur 7: eine Teilschnittansicht des erfindungsgemäßen Verschleißnachstellers in Richtung einer Ansicht U nach Figur 6.

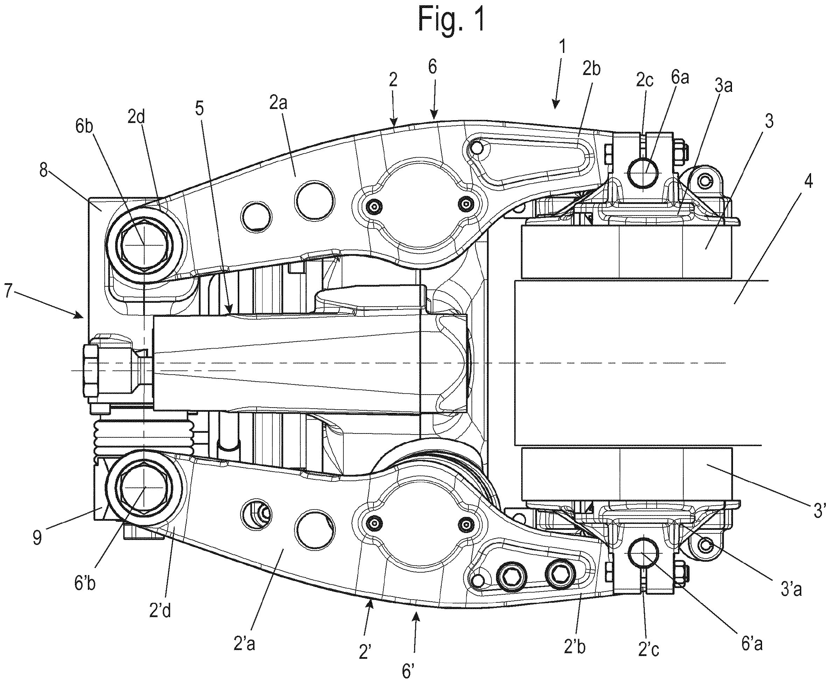

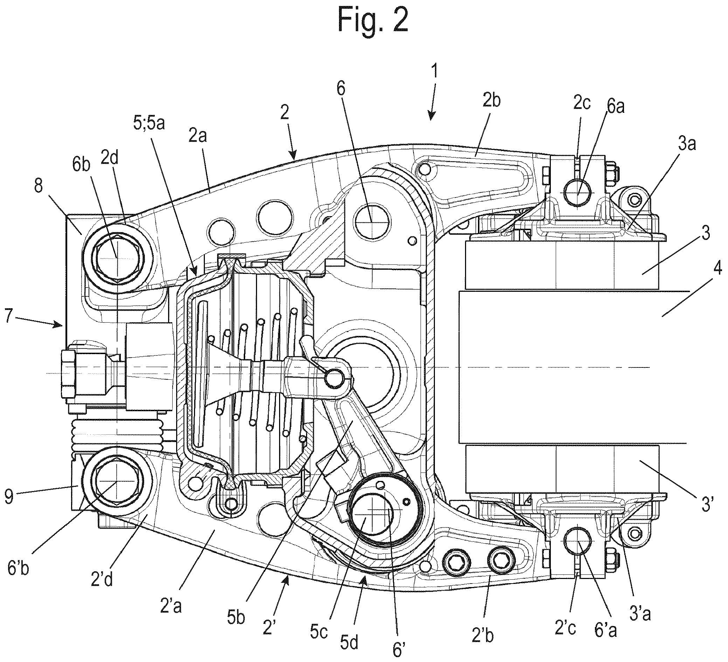

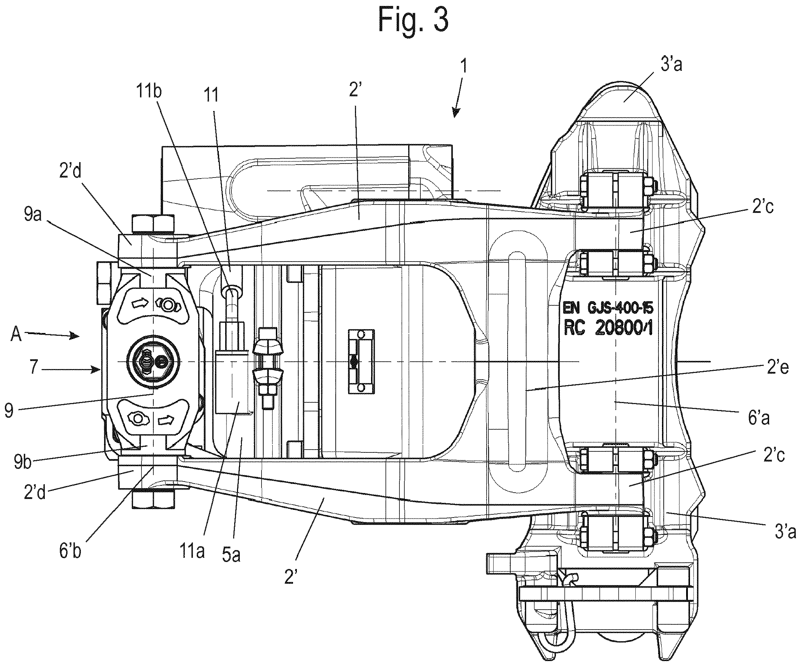

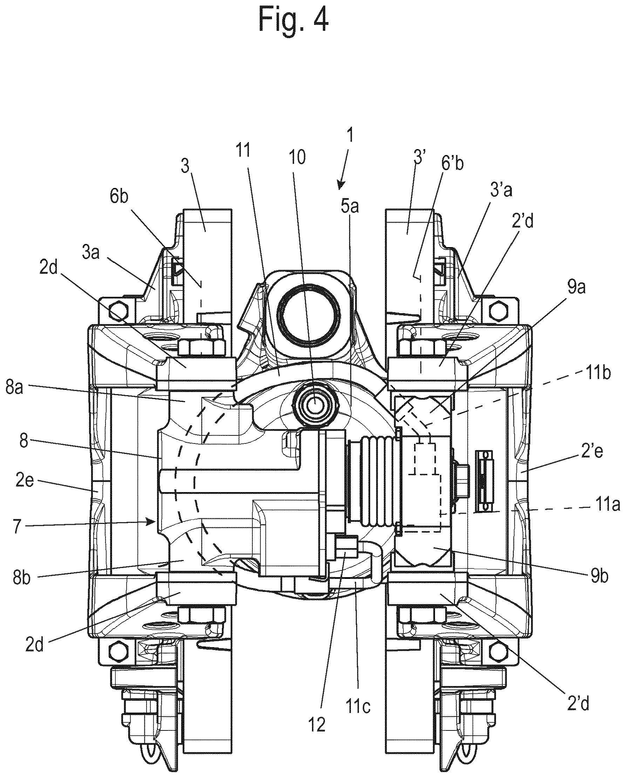

**Figur 1** zeigt eine schematische Draufsicht eines Ausführungsbeispiels einer erfindungsgemäßen Kompakt-Bremszangeneinheit 1 mit einem erfindungsgemäßen Verschleißnachsteller 7. In **Figur 2** ist eine Teilschnittansicht des Ausführungsbeispiels nach Figur 1 gezeigt. **Figur 3** stellt eine Seitenansicht des Ausführungsbeispiels nach Figur 1 dar, und **Figur 4** zeigt eine Ansicht des Ausführungsbeispiels nach Figur 3 in Richtung einer Ansicht A.

Die Kompakt-Bremszangeneinheit 1 bildet eine Scheibenbremse mit Bremsbelägen 3, 3' und einer Bremsscheibe 4 für ein Schienenfahrzeug und umfasst zwei Zangenhebel 2, 2', die doppelwangig ausgebildet sind. Die doppelwangigen Zangenhebel 2, 2' weisen jeweils in zwei Horizontalebenen jeweils zwei in einer Hebelschwenkachse 6, 6' untereinander verbundene Hebelabschnitte 2a, 2b auf. Diese wiederum sind durch einen vertikalen Verbinder 2e, 2'e untereinander verbunden (siehe Figur 3 und 4).

Jeder Hebelabschnitt 2a, 2'a; 2b, 2'b weist jeweils ein freies Hebelende 2c, 2'c; 2d, 2'd auf. So sind erste Hebelenden 2c, 2'c jeweils mit einem Bremsbelaghalter 3a, 3'a eines jeweiligen Bremsbelags 3, 3' gelenkig in Schwenkachsen 6a, 6'a gekoppelt. Die Bremsbeläge 3, sind beidseitig der Bremsscheibe 4 angeordnet und liegen parallel zu einer gedachten vertikalen Mittelebene der Bremsscheibe 4. Durch diese gedachte Mittelebene verläuft eine gedachte Längsachse der Kompakt-Bremszangeneinheit 1.

Die zweiten Hebelenden 2d, 2'd sind mit dem Verschleißnachsteller 7, der auch als Druckstangensteller bezeichnet wird, über Schwenkachsen 6b, 6'b gelenkig verbunden. Der Verschleißnachsteller 7 weist ein Nachstellergehäuse 8 und ein Nachstellerjoch 9 auf. Dabei ist das Nachstellergehäuse 8 mit Befestigungsabschnitten 8a und 8b vertikal zwischen den zweiten Hebelenden 2d angeordnet. Zwischen den anderen beiden Hebelenden 2'd ist das Nachstellerjoch 9 mit seinen Befestigungsabschnitten 9a und 9b angebracht. Der Verschleißnachsteller 7 wird unten noch im Detail beschrieben.

Zwischen den beiden doppelwangigen Hebeln 2, 2' ist ein Krafterzeuger 5 in einem Bereich zwischen dem Verschleißnachsteller 7 und einem nicht bezeichneten zentralen Bremsenkörper angeordnet. Der Krafterzeuger 5 weist einen Bremszylinder 5a auf, welcher mit einem Antriebsarm 5b gekoppelt ist. Der Antriebsarm 5b wirkt mit einem Bolzen 5c als Exzenterantrieb 5d für die Bremszangeneinheit 1 zusammen.

Der eine Zangenhebel 2 ist um eine zugehörige Hebelschwenkachse 6 an dem nicht näher bezeichneten Bremsenkörper verschwenkbar angebracht. Der andere Zangenhebel 2' ist über den Bolzen 5c, der seinerseits um eine Schwenkachse 6' an dem Bremsenkörper verschwenkbar angelenkt ist, verschwenkbar angebracht. Auf diese Weise ist der Krafterzeuger 5 mit dem anderen Hebelarm 2' gekoppelt und bildet den Bremsenantrieb.

Die Schwenkachsen 6, 6'; 6a, 6'a; 6b, 6'b verlaufen vertikal parallel zueinander.

Der Bremszylinder 5a ist ein pneumatischer Bremszylinder und besitzt einen Druckleitungsanschluss 10, wie in Figur 4 gezeigt ist.

Der erfindungsgemäße Verschleißnachsteller 7 wird wie der Bremszylinder 5a mit einem Druckmedium, das hier Druckluft ist, beaufschlagt. Der Verschleißnachsteller 7 ist somit ein pneumatischer Verschleißnachsteller 7 und wird wie der Bremszylinder 5a durch das Druckmedium angetrieben.

Dazu ist eine Nachstellerdruckleitung 11 vorgesehen, welche an einem Bremszylinderanschluss 11a über eine Verbindung 11b angeschlossen ist und mit einem Nachstelleranschluss 12 des Verschleißnachstellers 7 über eine weitere Verbindung 11c verbunden ist. Dies ist in Figur 3 und 4 dargestellt.

Der Verschleißnachsteller 7 ist so über die Nachstellerdruckleitung 11, welche hier eine flexible Druckleitung (Schlauchleitung) ist, mit dem Bremszylinder 5a verbunden. Auf diese Weise wird der Verschleißnachsteller 7 gleichzeitig mit dem Bremszylinder 5a mit Bremsdruck versorgt. Die Nachstellerdruckleitung 11 ist als Schlauchleitung so verlegt, dass sich der Verschleißnachsteller 7 relativ zum Bremszylinder 5a frei bewegen kann. Der Verschleißnachsteller 7 verlängert sich aufgrund von Verschleißnachstellung. Verschiebungen aus der Achskinematik treten ebenfalls auf.

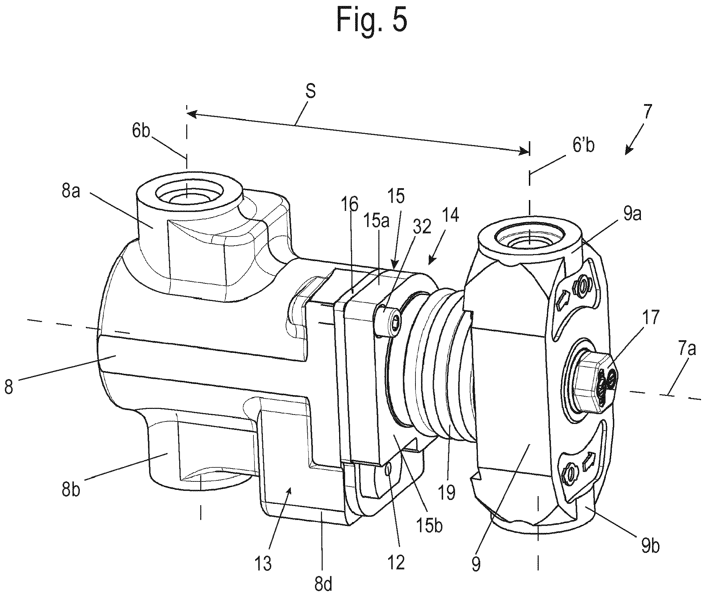

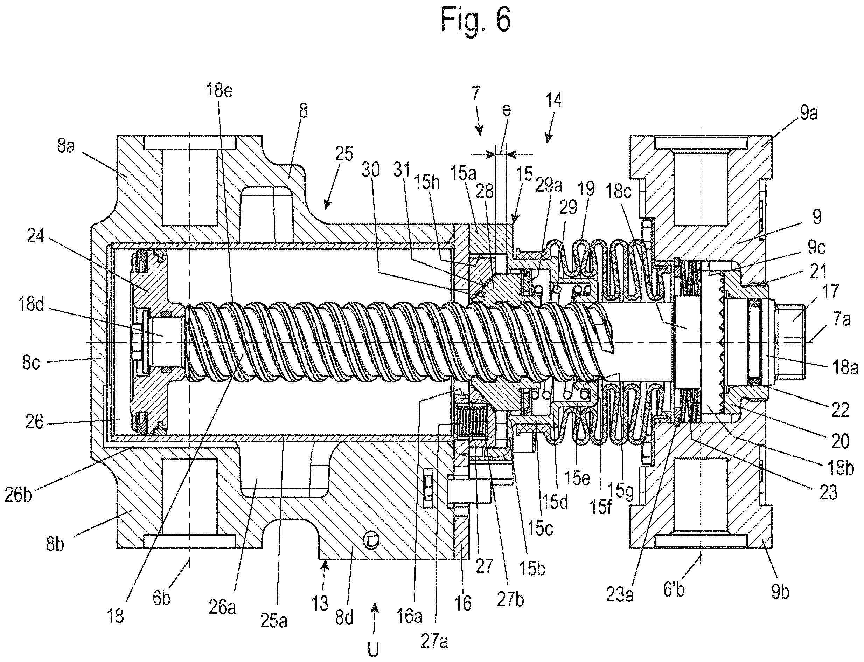

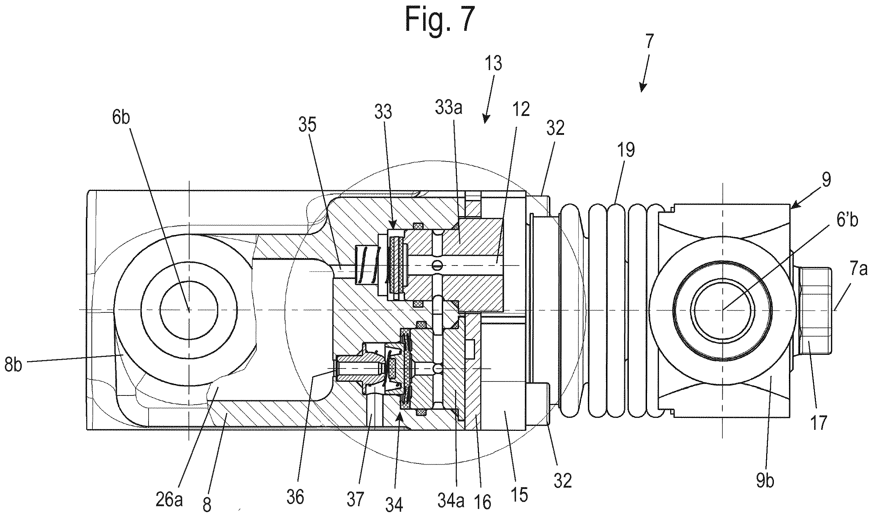

**Figur 5** zeigt eine schematische Perspektivansicht des erfindungsgemäßen Verschleißnachstellers 7. **Figur 6** stellt eine schematische Längsschnittansicht des erfindungsgemäßen Verschleißnachstellers 7 nach Figur 5 dar. In **Figur 7** ist eine Teilschnittansicht des erfindungsgemäßen Verschleißnachstellers in Richtung einer Ansicht U nach Figur 6 gezeigt.

Der pneumatische Verschleißnachsteller 7 stellt einen Abstand S zwischen den Schwenkachsen 6b, 6'b der Hebelenden 2d, 2'd der Zangenhebel 2 in Abhängigkeit von einem Verschleiß von Bremsbelag 3, 3' und Bremsscheibe 4. Damit wird auch gleichzeitig ein Lüftspiel zwischen Bremsbelag 3, 3' und Bremsscheibe 4 eingestellt, wobei der Verschleißnachsteller 7 immer ein kontinuierlich gleichgroßes Lüftspiel einstellt.

Der pneumatische Verschleißnachsteller 7 für Kompakt-Bremszangeneinheiten 1 umfasst das Nachstellergehäuse 8, das Nachstellerjoch 9, eine Spindel 18 und weiterhin drei Grundelemente, nämlich einen Nachstellzylinder 25, einen Rückhubbegrenzer 14 und eine Ventileinrichtung 13.

Der Nachstellzylinder 25 und die Ventileinrichtung 13 sind in dem Nachstellergehäuse 8 angeordnet. In einer nicht gezeigten, aber leicht vorstellbaren Ausführung ist es auch möglich, dass die Ventileinrichtung 13 als separate Baugruppe außerhalb des Nachstellergehäuses 8 in der Nachstellerdruckleitung 11 angeordnet ist. Der Rückhubbegrenzer 14 ist zwischen dem Nachstellergehäuse 8 und dem Nachstellerjoch 9 in einem Rückhubbegrenzergehäuse 15 in Zusammenwirkung mit der Spindel 18 und weiteren Bauteilen, die unten noch beschrieben werden, angeordnet.

Die Spindel 18 erstreckt sich durch den Verschleißnachsteller 7 längs seiner Nachstellerachse 7a. Dabei ist ein Rückstellende 18a der Spindel 18 in dem Nachstellerjoch 9 gelagert. Dies wird unten noch näher beschrieben. Das andere Ende der Spindel 18 ist als ein Kolbenende 18d mit dem Nachstellkolben 24 in nicht näher beschriebener Weise in axialer Richtung fest aber drehbar verbunden und über den Nachstellkolben 24 in dem Nachstellzylinder 25 in dem Nachstellergehäuse 8 gelagert.

Das Nachstellergehäuse 8 weist den Nachstellzylinder 25 auf, dessen Längsachse in der Nachstellerachse 7a verläuft. Die Schwenkachse 6b ist rechtwinklig zu der Nachstellerachse 7a angeordnet und verläuft durch die Befestigungsabschnitte 8a, 8b des Nachstellergehäuses 8. Mittels der Befestigungsabschnitte 8a, 8b ist das Nachstellergehäuse 8 mit den Hebelenden 2d des einen doppelwangigen Zangenhebels 2 gekoppelt (siehe Figuren 1, 2, 4).

Der Nachstellzylinder 25 erstreckt sich von einer Stirnwand 8c des Nachstellergehäuses 8, welche zwischen den Befestigungsabschnitten 8a, 8b angeordnet ist, bis zu dem gegenüberliegenden, offenen Ende des Nachstellergehäuses 8. In den Nachstellzylinder 25 ist eine Zylinderlaufbuchse 25a eingesetzt, in welcher der Nachstellkolben 24 in Längsrichtung in der Nachstellerachse 7a verschiebbar angeordnet ist. Der Nachstellzylinder 25 wandelt mittels des Nachstellkolbens 24 den aktuellen Bremsdruck in eine ausreichend hohe Nachstellkraft um.

Der Nachstellkolben 24 weist einen Hub auf, der zu Nachstellung des gesamten Verschleißes von Bremsbelägen 3, 3' und Bremsscheibe 4 der Kompakt-Bremszangeneinheit 1 ausreicht.

Die Zylinderlaufbuchse 25a, die Innenseite der Stirnwand 8c und der Nachstellkolben 24 legen einen Raum fest, der als Nachstellerdruckraum 26 bezeichnet und als Druckvolumen genutzt wird. Durch die Bewegung des Nachstellerkolbens 24 ist das Volumen dieses Nachstellerdruckraums 26 variabel. Der Nachstellerdruckraum 26 kommuniziert mit einem weiteren, unveränderlichen Druckraum 26a über eine Verbindung 26b. Der weitere Druckraum 26a und die Verbindung 26b sind in dem Nachstellergehäuse 8 eingeformt.

Der Druckraum 26a ist über ein Rückschlagventil 33 (Figur 7) mit dem Nachstelleranschluss 12 (Figur 5 und 7) verbunden. Der Nachstelleranschluss 12 ist über die flexible Nachstellerdruckleitung 11 (Schlauchleitung) an einen nicht gezeigten Druckraum bzw. Verbindung zu dem Druckanschluss des Bremszylinders 5a angeschlossen, wie in Figur 3 und 4 dargestellt ist. Auf diese Weise wird der Verschleißnachsteller 7 gleichzeitig mit dem Bremszylinder 5a mit Bremsdruck versorgt.

Der Nachstellkolben 24 wirkt auf die Spindel 18, die im Nachstellerjoch 9 gegen eine Rückstellverzahnung 18b in einer zentralen Ausnehmung 9c des Nachstellerjochs 9 drehbar gelagert ist. Die Rückstellverzahnung 18b steht mit einer mit ihr korrespondierenden Verzahnung einer Stirnseite einer Lagerbuchse 20 in Eingriff. Die Lagerbuchse 10 ist zentral in dem Nachstellerjoch 9 in einer Bohrung 21 eingesetzt und in nicht näher beschriebener Weise verdrehsicher befestigt. Das Rückstellende 18a der Spindel 18 erstreckt sich durch eine Bohrung der Lagerbuchse 20 und ist gegenüber dieser mittels einer Dichtung 22, z.B. ein O-Ring, abgedichtet. Der von dem Nachstellerjoch 9 hervorstehende Endabschnitt des Rückstellendes 18a der Spindel 18 ist mit einem Rückstellsechskant 17 versehen.

Die Rückstellverzahnung 18b ist mit der Spindel 18 drehfest verbunden, z.B. einstückig mit der Spindel 18 ausgebildet, und geht in Richtung zum Nachstellergehäuse 8 weisend in einen Wellenabschnitt 18c über, auf dem eine Axialfeder 23, hier als Tellerfeder ausgebildet, angeordnet ist. Die Axialfeder 23 stützt sich an der Rückstellverzahnung 19 und an einem Axialsicherungsring 23a in der Ausnehmung 9c des Nachstellerjochs 9 ab. Auf diese Weise wirkt eine Axialkraft der Axialfeder 23 auf die Rückstellverzahnung 18b und drückt diese zusammen mit der Spindel 18 mit einer bestimmten Vorspannung gegen die ortsfeste Lagerbuchse 20. Daraus ergibt sich eine Verdrehsicherung der Spindel 18 bis zu einem bestimmten Drehmoment.

Durch eine Axialkraft, die durch eine Zuspannung der Bremszangeneinheit 1 mittels des Bremszylinders 5a über die Befestigungsabschnitte 8a, 8b des Nachstellergehäuses 8 und die Befestigungsabschnitte 9a, 9b des Nachstellerjochs 9 von beiden Seiten auf die Spindel 18 einwirkt, ist die Spindel 18 dadurch über die Rückstellverzahnung 18b und die Lagerbuchse 20 zusätzlich zu der Kraft der Axialfeder 23 verdrehgesichert. Dabei wird in diesem Zustand der zugespannten Bremszangeneinheit 1 diese Axialkraft über das Nachstellerjoch 9, die Lagerbuchse 20 und die Rückstellverzahnung 18b in das Rückstellende 18a der Spindel 18 eingeleitet. Auf der anderen Seite der Spindel 18 wird diese Axialkraft durch das Nachstellergehäuse 8 über die Zwischenplatte 16, den Zahnring 27 und die Druckmutter 28 auf die Spindel 18 übertragen. Dabei wird das durch die auf das nichtselbsthemmende Außengewinde 18e der Spindel 18 wirkende Axialkraft entstehende und auf die Druckmutter 28 wirkende Drehmoment über den Zahnring 27 im Rückhubbegrenzergehäuse 15 abgestützt. Auf diese Weise wird die Spindel 18 von ihren beiden Enden 18a, 18c her mit der durch die zugespannte Bremse erzeugten Axialkraft beaufschlagt.

Wenn diese durch die Zuspannung der Bremszangeneinheit 1 bewirkte Axialkraft bei gelöster Bremszangeneinheit 1 nicht auftritt, kann die Spindel 18 bei Bedarf, z.B. bei Bremsbelagwechsel, mittels Werkzeug über den Rückstellsechskant 17 ratschend verdreht werden. Mit anderen Worten, ein Eingriff der Rückstellverzahnung 18b mit der Lagerbuchse 20 bildet in diesem Fall mit der Vorspannung der Axialfeder 23 einen Ratschenmechanismus.

Der Rückhubbegrenzer 14 umfasst ein Rückhubbegrenzergehäuse 15, eine Zwischenplatte 16, einen Zahnring 27, mindestens eine Feder 27a, eine Druckmutter 28 und eine Druckfeder 29.

Der Rückhubbegrenzer 15 verhindert eine Verkürzung des Verschleißnachstellers 7 unter Bremskraft in Richtung der Nachstellerachse 7a und gewährleistet, dass der sich der Verschleißnachsteller 7 nur dann in Richtung der Nachstellerachse 7a verlängert (nachstellt), wenn sich das Lüftspiel zwischen Bremsbelägen 3, 3 und Bremsscheibe 4 vergrößert.

Das Rückhubbegrenzergehäuse 15 weist eine Basis 15a in Form einer Platte mit teilweise gerundeten Ecken und mit einer Ausnehmung 15h auf. Die Ausnehmung 15h wird in Richtung auf das Nachstellergehäuse 8 bei Montage mit der Zwischenplatte 16 bis auf eine Durchgangsbohrung 16a für die Spindel 18 verschlossen. Auf der anderen zum Nachstellerjoch 9 weisenden Seite ist die Basis 15a mit einem ersten Stirnwandring 15b versehen, auf welcher ein erster hohlzylinderförmiger Gehäuseabschnitt 15c angebracht ist, der wiederum an seinem zum Nachstellerjoch 9 weisenden Ende in einen zweiten Stirnwandring 15d mit einem daran angebrachten zweiten, ebenfalls hohlzylinderförmigen Gehäuseabschnitt 15e übergeht. Ein Außendurchmesser des zweiten Gehäuseabschnitts15e ist kleiner als ein Außendurchmesser des ersten Gehäuseabschnitts 15c. Der Außendurchmesser des ersten Gehäuseabschnitts 15c ist kleiner als ein Innendurchmesser der Ausnehmung 15h der Basis 15a.

An dem zum Nachstellerjoch 9 weisenden Ende des zweiten Gehäuseabschnitts 15e ist ein dritter Stirnwandring 15f angeformt, dessen Rand nach innen in den zweiten Gehäuseabschnitt 15e hinein um 90° umgebogen bzw. umgekantet ist und einen umlaufenden hohlzylinderförmigen Kragen 15g bildet, der sich etwa über die halbe Länge des zweiten Gehäuseabschnitts 15e in Richtung der Nachstellerachse 7a erstreckt. Durch die so durch den umlaufenden hohlzylinderförmigen Kragen 15g gebildeten zentralen Durchgangsöffnung erstreckt sich die Spindel 18.

Die Zwischenplatte 16 ist an der Seite des Nachstellergehäuses 8 zwischen diesem und der Basis 15a des Rückhubbegrenzergehäuses 15 angeordnet. Das Rückhubbegrenzergehäuse 15 und die Zwischenplatte 16 sind hier mittels Befestigungselemente 32, z.B. Schrauben, zusammen an dem Nachstellergehäuse 8 dicht befestigt.

Die Zwischenplatte 16 verschließt sowohl die Öffnung des Nachstellzylinders 25 bis auf die Durchgangsbohrung 16a, durch welche sich die Spindel 18 erstreckt, als auch die Ausnehmung 15h der Basis 15a des Rückhubbegrenzergehäuses 15. Zudem weist die Zwischenplatte 16 eine nicht bezeichnete Aufnahme für die mindestens eine Feder 27a zur Halterung und Abstützung auf.

Der Zahnring 27 steht mit einer planen Seite mit der Zwischenplatte 16 in Kontakt. An der anderen Seite ist der Zahnring 27 mit einem Innenkonus mit einer Verzahnung 30 versehen. Die Verzahnung 30 steht mit einer zu ihr korrespondierenden Verzahnung 31 der Druckmutter 28 in Eingriff. Die Druckmutter 28 ist mit einem Innengewinde versehen, welches mit einem Außengewinde 18e der Spindel 18 in Eingriff steht, die sich durch die Druckmutter 28 und weiter durch die Gehäuseabschnitte 15b, 15c des Rückhubbegrenzergehäuses 15 in das Nachstellerjoch 9 wie oben beschrieben erstreckt. Die Druckmutter 28 weist auf ihrer zu dem Nachstellerjoch 9 weisenden Seite einen Absatz auf, auf dem ein Axiallager 29a angeordnet ist und über das sich die Druckfeder 29 mit einem Ende abstützt. Die Druckfeder 29 erstreckt sich zu einem Teil durch den ersten Gehäuseabschnitt 15c und dann durch den zweiten Gehäuseabschnitt 15e des Rückhubbegrenzergehäuses 15, wobei sich das andere Ende der Druckfeder 29 an dem dritten Stirnwandring 15f abstützt und zwischen dem umgebogenen Kragen 15g und der Innenseite des zweiten Gehäuseabschnitts 15e des Rückhubbegrenzergehäuses 15 angeordnet ist.

Der Zahnring 27 ist in der Ausnehmung 15h der Basis 15a des Rückhubbegrenzergehäuses 15 drehsicher aber verschiebbar gelagert. Eine Verschiebbarkeit des Zahnrings 27 längs der Nachstellerachse 7a ist zum Einen auf der Seite, die zum Nachstellgehäuses 8 weist, durch die Zwischenplatte 16 und zum Anderen auf der anderen Seite durch den ersten Stirnwandring 15b begrenzt. Ein Abstand der Seite des Zahnrings 27, welche zum Nachstellerjoch 9 weist, zu der Innenseite des ersten Stirnwandrings 15b wird als Einstellmaß "e" bezeichnet.

Mittels axialer Federkraft der mindestens einen Feder 27a, die in der Zwischenplatte 16 mit einem Ende aufgenommen und abgestützt ist, wird der Zahnring 27 gegen die Druckmutter 28 gedrückt. Die Feder 27a ist mit dem anderen Ende in einer Aufnahme 27b des Zahnrings 27 aufgenommen. Hier ist nur eine Feder 27a gezeigt, es ist natürlich möglich, dass mehrere Federn 27a am Umfang des Zahnrings 27 verteilt vorgesehen sind. Die Druckmutter 28 wiederum wird mittels der (stärkeren) Druckfeder 29 über den Zahnring 27 auf Anlage an der Zwischenplatte 16 gedrückt. Die axiale Kraft der Druckfeder 29 wirkt entgegengesetzt zu der axialen Kraft der mindestens einen Feder 27a.

Ein Faltenbalg 19 ist mit einem ersten Ende an dem ersten Gehäuseabschnitt 15c des Rückhubbegrenzergehäuses 15 befestigt und erstreckt sich über und um den zweiten Gehäuseabschnitt 15e, einen Abschnitt der Spindel 18 bis in die Ausnehmung 9c des Nachstellerjochs 9, an welchen der Faltenbalg 19 mit seinem anderen Ende in nicht näher beschriebener Weise befestigt ist. Der Faltenbalg 19 schützt und dichtet auf diese Weise das Rückhubbegrenzergehäuse 15, die Spindel 18 und deren Lagerung in der Ausnehmung 9c des Nachstellerjochs 9.

Die Ventileinrichtung 13 ist hier in einem Ventilabschnitt 8d des Nachstellergehäuses 8 angeordnet. **Figur 7** zeigt dies in einer Teilschnittdarstellung des Nachstellergehäuses 8 in einer Ansicht U nach Figur 6.

Die Funktion der Ventileinrichtung 13 besteht darin, einerseits den Bremsdruck ungehindert in den Nachstellzylinder 25 einzulassen und andererseits aber beim Lösen der Bremse, d.h. Absenken des Bremsdrucks des Bremszylinders 5a auf Atmosphärendruck, den Nachstellzylinder 25 nur zeitverzögert zu entlüften.

Hierzu weist die Ventileinrichtung 13 ein Einlassventil 33 mit Rückschlagfunktion und ein Entlüftungsventil 34 auf.

Das Einlassventil 33 umfasst einen Ventilhalter 33a mit dem Nachstelleranschluss 12.

Der Ventilhalter 33a ist von der Seite des Nachstellgehäuses 8, welche zum Nachstellerjoch 9 weist, in den Ventilabschnitt 8d eingesetzt. Der Anschluss 12 kommuniziert mit einem nicht näher bezeichneten Kanal, der sich weiter durch das Ventil 33 erstreckt und über einen Einlasskanal 35 in den Druckraum 26a des Nachstellergehäuses 8 mündet. Die Einzelheiten des Einlassventils 33 werden hier nicht weiter beschrieben.

Das Entlüftungsventil 34 umfasst einen Ventilhalter 34a und steht in nicht näher beschriebener Weise mit der Nachstellerdruckleitung 11 in Kommunikation.

Eine Verbindung zwischen dem Druckraum 26a über einen Entlüftungskanal 36 und einer Entlüftungsöffnung 37 wird durch das Entlüftungsventil 34 ermöglicht. Dies ist hier nicht weiter beschrieben.

Das Einlassventil 33 lässt den Druck aus dem Bremszylinder 5a fast ungehindert in den Druckraum 26a und über die Verbindung 26b in den Nachstelldruckraum 26 des Nachstellzylinders 25 ein. Wird der Bremszylinder 5a bei Lösen der Bremszangeneinheit 1 entlüftet, wird der in dem Druckraum 26a, in der Verbindung 26b und in dem Nachstelldruckraum 26 des Nachstellzylinders 25 noch vorhandene Druck nur zeitlich verzögert über das Entlüftungsventil 34 in die Atmosphäre entlüftet.

Die Ventileinrichtung 13 hält beim Lösen der Bremse (=Absenken des Bremsdruckes) den Druck im Nachstelldruckraum 26 des Nachstellzylinders 25 länger aufrecht als der Bremsdruck im Bremszylinder 5a wirkt. Ist der Druck im Bremszylinder 5a geringer als ein vorher festgelegter unterer Grenzwert, kann der Verschleißnachsteller 7 einen aufgetretenen Verschleiß an den Belägen 3, 3' durch Verlängerung nachstellen. Erst dann wird der Verschleißnachsteller 7 zur Atmosphäre entlüftet.

Wird der Bremszylinder 5a bei einem Zuspannvorgang der Bremszangeneinheit 1 mit Druck beaufschlagt, legt die Bremszangeneinheit 1 an. Gleichzeitig wird der Druck in den Verschleißnachsteller 7 über den Nachstelleranschluss 12 und das Einlassventil 33 über den Druckraum 26a, die Verbindung 26b in den Nachstellerdruckraum 26 geleitet.

Die Kraft des Bremszylinders 5a bewirkt wie oben beschrieben über die Zangenhebel 2, 2' eine Axialkraft auf den Verschleißnachsteller 7, welche der Nachstellzylinder 25 bei gleichem Druck nicht überwinden kann. Die Länge des Verschleißnachstellers 7, d.h. der Abstand S, ändert sich daher nicht.

Wird die Bremszangeneinheit 1 gelöst, wird der Nachstellzylinder 25 des Verschleißnachstellers 7 mittels des Entlüftungsventils 34 wesentlich langsamer entlüftet als der Bremszylinder 5a. Dann erfährt der Verschleißnachsteller 7 keine durch den Bremszylinder 5a bewirkte Axialkraft mehr, und der Nachstellkolben 24 kann die Bremsbeläge 3, 3' auf Anlage an der Bremsscheibe 4 halten, bis der Bremszylinder 5a seine Lösestellung erreicht hat. Dabei wird die Druckmutter 28 zusammen mit dem Zahnring 27 um das Einstellmaß "e" verschoben, bis der Zahnring 27 an der Innenseite des ersten Stirnwandrings 15b anliegt. Dieses entspricht dem Soll-Belagspiel, d.h. dem Soll-Lüftspiel zwischen Bremsbelägen 3, 3' und Bremsscheibe 4. Wenn der Nachstellzylinder 25 weiter entlüftet wird, werden der Zahnring 27 und die mit ihm über die Verzahnung 30, 31 in Eingriff stehende Druckmutter 28 durch die Federkraft der Druckfeder 29 um das Einstellmaß "e" wieder zurückgeschoben (in Richtung auf das Nachstellergehäuse 8), bis der Zahnring 27 an der Zwischenplatte 16 zur Anlage kommt. Damit ist das Lüftspiel zwischen Bremsbelägen 3, 3' und Bremsscheibe 4 wieder hergestellt.

Hat ein Verschleiß (der Bremsbeläge 3, 3' und auch der Bremsscheibe 4) stattgefunden, oder war das aktuelle Lüftspiel vor dem Bremsvorgang zu groß, wird beim Lösen der Bremszangeneinheit 1 zunächst die Druckmutter 28 in Richtung auf das Nachstellerjoch 9 weiter geschoben, da der Nachstellerdruckraum 26 noch nicht entlüftet ist und der Druck im Nachstellerdruckraum 26 den Nachstellkolben 24 und die mit ihm verbundene Spindel 18 in Richtung Nachstellerjoch 9 drückt. Während des Verschiebewegs von Zahnring 27 und Druckmutter 28 längs des Einstellwegs "e" stehen die Verzahnungen 30 und 31 in Eingriff. Der Zahnring 27 ist verdrehgesichert, daher kann sich die Druckmutter 28 auf dem Außengewinde 18e der Spindel 18 bei der Längsbewegung der Spindel 18 nicht verdrehen.

Bei weiterer Längsbewegung der Spindel 18 bleibt der Zahnring 27 auf Anlage an der ersten Stirnwandrings 15b an stehen. Die Zahnkupplung bzw. Verzahnung 30, 31 von Zahnring 27 und Druckmutter 28 kommt nun dabei außer Eingriff, und die Druckmutter 28 kann sich durch die Federkraft der Druckfeder 29 entsprechend Verschleiß auf dem Außengewinde 18e der Spindel 18 verdrehen und nachfassen, d.h. wieder in Eingriff mit dem Zahnring 27 kommen.

Eine Drehbewegung der Druckmutter 28 relativ zu der drehfesten Druckfeder 29 wird durch ein Axiallager 29a zwischen Druckmutter 28 und dem an der Druckmutter 28 angeordneten Ende der Druckfeder 29 ermöglicht.

Solange der Druck des Bremszylinders 5a, der auch an dem Nachstelleranschluss 12 ansteht, den bestimmten unteren Grenzwert nicht unterschritten hat, bleibt das Entlüftungsventil 34 geschlossen. Dies ist durch die Kommunikation des Entlüftungsventils 34 mit der Nachstellerdruckleitung 11 ermöglicht.

Ist der Druck des Bremszylinders 5a unter den bestimmten unteren Grenzwert gefallen, öffnet sich das Entlüftungsventil 34 vollständig. Dabei wird der Druckraum 26a des Nachstellzylinders 25 über den Entlüftungskanal 35 durch das Entlüftungsventil 34 mit der Entlüftungsöffnung 37 und somit mit der Atmosphäre verbunden. Der Verschleißnachsteller 7 kann sich dann - angetrieben von der Druckfeder 29 der Druckmutter 28 um das Einstellmaß "e" verkürzen. Dabei werden dann die Bremsbeläge 3, 3' von der Bremsscheibe 4 um das Lüftspiel abgehoben.

Wenn die Bremszangeneinheit 1 ein wesentlich zu großes Lüftspiel aufweist und in diesem Fall dabei betätigt wird, z.B. nach einem Wechsel der Bremsbeläge 3, 3', so verlängert sich der Verschleißnachsteller 7 bereits beim ersten Bremsvorgang, bis die Bremsbeläge 3, 3' an der Bremsscheibe 4 anliegen. Wird die Bremszangeneinheit 1 wieder gelöst, verlängert sich der Verschleißnachsteller 7 um einen weiteren Betrag, der dem gesamten Belaghub reduziert um das Belagspiel (Lüftspiel) entspricht. Mit dieser Funktion wird der Verschleißnachsteller 7 auch "Sprungsteller" genannt.

Für die Funktion des Verschleißnachstellers 7 ist nur eine Nachstellerdruckleitung 11 vom Bremszylinder 5a zum Nachstellzylinder 25, d.h. zum Nachstelleranschluss 12 am Nachstellergehäuse 8, erforderlich. Diese kann platzsparend und auch vergleichsweise kostengünstig ausgeführt werden. Die kurze und platzsparende Nachstellerdruckleitung 11 ist aus Figur 4 deutlich erkannbar.

Die Erfindung ist durch das oben angegebene Ausführungsbeispiel nicht eingeschränkt, sondern im Rahmen der Ansprüche modifizierbar.

So ist z.B. denkbar, dass der Bremsdruck für den Antrieb des Verschleißnachstellers 7 über die Nachstellerdruckleitung 11 direkt aus der Druckleitung des Bremszylinders 5a abgezweigt und dem Nachstellzylinder 25 des Verschleißnachstellers 7 zugeführt wird.

### Bezugszeichenliste

- 1: Kompakt-Bremszangeneinheit
- 2,2': Zangenhebel
- 2a, 2'a; 2b, 2'b: Hebelabschnitt
- 2c, 2'c; 2d, 2'd: Hebelende
- 2'e: Verbinder
- 3,3': Bremsbelag
- 3a, 3'a: Bremsbelaghalter
- 4: Bremsscheibe
- 5: Krafterzeuger
- 5a: Bremszylinder
- 5b: Antriebsarm
- 5c: Bolzen
- 5d: Exzenterantrieb
- 6,6': Hebelschwenkachse
- 6a, 6'a; 6b, 6'b: Schwenkachse
- 7: Verschleißnachsteller
- 7a: Nachstellerachse
- 8: Nachstellergehäuse
- 8a, 8b: Befestigungsabschnitt
- 8c: Stirnwand
- 8d: Ventilabschnitt
- 9: Nachstellerjoch
- 9a, 9b: Befestigungsabschnitt
- 9c: Ausnehmung
- 10: Druckleitungsanschluss
- 11: Nachstellerdruckleitung
- 11a: Nachstellerdruckleitungsanschluss
- 11b, 11c: Verbindung
- 11: Bremszylinderanschluss
- 12: Nachstelleranschluss
- 13: Ventileinrichtung
- 14: Rückhubbegrenzer
- 15: Rückhubbegrenzergehäuse
- 15a: Basis
- 15b, 15d, 15f: Stirnwandring
- 15c, 15e: Gehäuseabschnitt
- 15g: Kragen
- 15h: Ausnehmung
- 16: Zwischenplatte
- 16a: Durchgangsbohrung
- 17: Rückstellsechskant
- 18: Spindel
- 18a: Rückstellende
- 18b: Rückstellverzahnung
- 18c: Wellenabschnitt
- 18d: Kolbenende
- 18e: Außengewinde
- 19: Faltenbalg
- 20: Lagerbuchse
- 21: Befestigung
- 22: Dichtung
- 23: Axialfeder
- 23a: Axialsicherung
- 24: Nachstellkolben
- 25: Nachstellzylinder
- 25a: Zylinderlaufbuchse
- 26: Nachstellerdruckraum
- 26a: Druckraum
- 26b: Verbindung
- 27: Zahnring
- 27a: Feder
- 27b: Aufnahme
- 28: Druckmutter
- 29: Druckfeder
- 29a: Axiallager
- 30,31: Verzahnung
- 32: Befestigungselement
- 33: Einlassventil
- 33a: Ventilhalter
- 34: Entlüftungsventil
- 34a: Ventilhalter
- 35: Einlasskanal
- 36: Entlüftungskanal
- 37: Entlüftungsöffnung
- e: Einstellmaß
- A, U: Ansicht
- S: Abstand

## Patentansprüche

1. Verschleißnachsteller (7) einer Kompakt-Bremszangeneinheit (1), insbesondere für Schienenfahrzeuge, aufweisend ein Nachstellergehäuse (8), ein Nachstellerjoch (9), einen Gewindetrieb mit einer Spindel (18) und einer auf der Spindel (18) verschraubbaren Druckmutter (28),
**dadurch gekennzeichnet, dass**
der Verschleißnachsteller (7) als ein pneumatischer Verschleißnachsteller (7) mit einem Nachstellzylinder (25) und einem Rückhubbegrenzer (14) ausgebildet ist.

2. Verschleißnachsteller (7) nach Anspruch 1, **dadurch gekennzeichnet, dass** der Nachstellzylinder (25) in dem Nachstellergehäuse (8) angeordnet ist, wobei der Rückhubbegrenzer (14) zwischen dem Nachstellergehäuse (8) und dem Nachstellerjoch (9) in einem Rückhubbegrenzergehäuse (15) angeordnet ist.

3. Verschleißnachsteller (7) nach einem der vorhergehenden Ansprüche, **dadurch gekennzeichnet, dass** eine Zylinderlaufbuchse (25a) in den Nachstellzylinder (25) eingesetzt ist, in welcher der Nachstellkolben (24) in Längsrichtung in einer Nachstellerachse (7a) verschiebbar angeordnet ist und mit einem Kolbenende (18d) der Spindel (18) in axialer Richtung fest aber drehbar verbunden ist.

4. Verschleißnachsteller (7) nach einem der vorhergehenden Ansprüche, **dadurch gekennzeichnet, dass** der Nachstellzylinder (25) mit dem gleichen Druckmedium beaufschlagbar ist, mit dem ein Bremszylinder (5a) einer Bremszangeneinheit (1), welcher der Verschleißnachsteller (7) zuzuordnen ist, beaufschlagt ist.

5. Verschleißnachsteller (7) nach einem der vorhergehenden Ansprüche, **dadurch gekennzeichnet, dass** der Rückhubbegrenzer (14) ein Rückhubbegrenzergehäuse (15), eine Zwischenplatte (16), einen Zahnring (27), mindestens eine Feder (27a), die Druckmutter (28) und eine Druckfeder (29) umfasst.

6. Verschleißnachsteller (7) nach Anspruch 5, **dadurch gekennzeichnet, dass** das Rückhubbegrenzergehäuse (15) eine Basis (15a) mit einer Ausnehmung (15h) aufweist, in welcher der Zahnring (27) drehsicher und längs einer Nachstellerachse (7a) verschiebbar gelagert ist.

7. Verschleißnachsteller (7) nach Anspruch 7, **dadurch gekennzeichnet, dass** der Zahnring (27) zwischen der Zwischenplatte (16), welche zwischen dem Nachstellergehäuse (8) und dem Rückhubbegrenzergehäuse (15) angeordnet ist, und einem ersten Stirnwandring (15b) der Basis (15a) des Rückhubbegrenzergehäuses (15) um ein Einstellmaß (e) verschiebbar ist.

8. Verschleißnachsteller (7) nach einem der Ansprüche 5 bis 7, **dadurch gekennzeichnet, dass** der Zahnring (27) mit einer Verzahnung (30) versehen ist, welche mit einer zu ihr korrespondierenden Verzahnung (31) der Druckmutter (28) in Eingriff steht.

9. Verschleißnachsteller (7) nach einem der Ansprüche 5 bis 8, **dadurch gekennzeichnet, dass** der Zahnring (27) mittels mindestens einer Feder (27a), die sich an der Zwischenplatte (16) abstützt, mit einer Kraft beaufschlagt ist, welche den Zahnring (27) mit seiner Verzahnung (30) in Eingriff mit der Verzahnung (31) der Druckmutter (28) drückt.

10. Verschleißnachsteller (7) nach Anspruch 9, **dadurch gekennzeichnet, dass** die Druckmutter (28) mit der axialen Kraft einer Druckfeder (29) beaufschlagt ist, die sich in dem Rückhubbegrenzergehäuse (15) abstützt, und deren axiale Kraft der Kraft der mindestens einen Feder (27a) entgegengesetzt ist.

11. Verschleißnachsteller (7) nach einem der vorhergehenden Ansprüche, **dadurch gekennzeichnet, dass** die Spindel (18) mit ihrem Kolbenende (18d), welches mit dem Nachstellkolben (24) verbunden ist, über den Nachstellkolben (24) in dem Nachstellzylinder (25) in dem Nachstellergehäuse (8) gelagert ist und sich durch den Verschleißnachsteller (7) längs seiner Nachstellerachse (7a) bis in das Nachstellerjoch (9) erstreckt, in welchem die Spindel (18) mit einem Rückstellende (18a) gelagert ist.

12. Verschleißnachsteller (7) nach Anspruch 11, **dadurch gekennzeichnet, dass** die Spindel (18) an ihrem Rückstellende (18a) eine Rückstellverzahnung (18b) aufweist, welche mit einer Lagerbuchse (20), die in dem Nachstellerjoch (9) drehfest angeordnet ist, und einer Axialfeder (23) einen Ratschenmechanismus bildet.

13. Verschleißnachsteller (7) nach einem der vorhergehenden Ansprüche, **dadurch gekennzeichnet, dass** der Verschleißnachsteller (7) weiterhin eine Ventileinrichtung (13) aufweist, welche ein Einlassventil (33) für ein Druckmedium, vorzugsweise Druckluft, und ein Entlüftungsventil (34) umfasst.

14. Verschleißnachsteller (7) nach Anspruch 13, **dadurch gekennzeichnet, dass** die Ventileinrichtung (13) in einem Ventilabschnitt (8d) des Nachstellergehäuses (8) angeordnet ist.

15. Verschleißnachsteller (7) nach Anspruch 13, **dadurch gekennzeichnet, dass** die Ventileinrichtung (13) als separate Baugruppe außerhalb des Nachstellergehäuses (8) in der Nachstellerdruckleitung angeordnet ist.

16. Kompakt-Bremszangeneinheit (1) einer pneumatischen Scheibenbremse, insbesondere für Schienenfahrzeuge, aufweisend zwei Zangenhebel (2, 2'), einen Bremszylinder (2a), Bremsbeläge (3, 3') und einen Verschleißnachsteller (7),
**dadurch gekennzeichnet, dass**
der Verschleißnachsteller (7) als ein pneumatischer Verschleißnachsteller (7) ausgebildet ist und mit dem Druckmedium des Bremszylinders (5a) über eine Nachstellerdruckleitung (11) beaufschlagt ist, wobei die Nachstellerdruckleitung (11) an einem Bremszylinderanschluss (11a) oder/und an eine Druckleitung des Bremszylinders (5a) angeschlossen ist.

17. Kompakt-Bremszangeneinheit (1) nach Anspruch 16,
**dadurch gekennzeichnet, dass**
der Verschleißnachsteller (7) nach einem der Ansprüche 1 bis 15 ausgebildet ist.
